# EUROPEAN PATENT APPLICATION

(11) **EP 4 596 729 A1**
(43) Date of publication of application: **06.08.2025**
(21) Application number: 23885429.3
(22) Date of filing: 04.10.2023
(51) Int. Cl.: C21D 8/12, C22C 38/00, C22C 38/16, C22C 38/60, H01F 1/147

(54) **METHOD FOR MANUFACTURING NON-ORIENTED MAGNETIC STEEL SHEET**

(30) Priority: 31.10.2022 JP 2022174800
(71) Applicant: JFE Steel Corporation, Tokyo 100-0011 (JP)
(72) Inventor: OKUBO, Tomoyuki, Tokyo 100-0011 (JP); ZAIZEN, Yoshiaki, Tokyo 100-0011 (JP); SAITO, Hayato, Tokyo 100-0011 (JP); MARUYAMA, Shigehiro, Tokyo 100-0011 (JP)
(74) Representative: Grünecker Patent- und Rechtsanwälte PartG mbB
(86) International application number: PCT/JP2023/036146
(87) International publication number: WO 2024/095666

(57) **Abstract**

A non-oriented electrical steel sheet is produced by hot-rolling a slab containing, in mass%, C: 0.005% or less, Si: 3.0 to 5.0%, Al: 3.0% or less, Mn: 3.0% or less, and Cu: 0.01 to 0.5%, and then performing hot-band annealing and cold rolling thereon to obtain a cold-rolled sheet, and further performing finishing annealing thereon. The finishing annealing is performed by setting the dew point D_{H} of a furnace atmosphere in a region where the steel sheet temperature is in the range from 500°C to 800°C in a heating zone to -20°C or lower, and setting the dew point D_{S} of the furnace atmosphere in a region where the steel sheet temperature is in the range from above 800°C to the soaking temperature in the heating zone, as well as in a region where the steel sheet is in a soaking zone, to -40°C or lower, and also controlling the dew points D_{H} and D_{S} so that the relationship of D_{H}>D_{S} is satisfied, thereby suppressing the oxidation of the surface of the steel sheet after the finishing annealing. Thus, a non-oriented electrical steel sheet with low iron loss is stably obtained as a high-grade material with a high Si content.

## Description

### Technical Field

The present invention relates to a method for producing a non-oriented electrical steel sheet that is mainly used as an iron core material of a rotary machine.

### Background Art

A non-oriented electrical steel sheet (silicon steel sheet) is a soft magnetic material that is mainly used as an iron core material of a motor. Such a steel sheet has a large amount of Si added thereto as an alloying element to increase the specific resistance of steel and thus reduce iron loss. Non-oriented electrical steel sheets are often used for industrial induction motors, and a so-called low-grade material with a Si content of less than 3.0 mass% and a thickness of 0.5 mm to 0.35 mm is used as a non-oriented electrical steel sheet in many cases. Such a low-grade material is characterized by its high magnetic flux density as the content of Si, which is a non-magnetic element, is relatively lower, and thus is advantageous in reducing an excitation current and copper losses in an induction motor. In addition, since such a low-grade material is relatively thick, there is also an advantage for iron and steel manufacturers in that the productivity of the material throughout a continuous rolling process and a continuous annealing line is high, which allows for low-cost production.

Meanwhile, in recent years, the electrification of vehicles has been rapidly progressing in reducing CO₂ emissions to address climate change. Electric vehicles are powered by large-size motors, replacing internal combustion engines. Thus, a large volume of electrical steel sheets is required for the electrification of vehicles. Meanwhile, since the drive motor of an electric vehicle is required to be compact and lightweight, a strong rare-earth permanent magnet is adopted as a means of generating a magnetic field. **In** addition, highspeed rotation of the motor is desired to achieve a high output. Therefore, iron loss is more dominant than copper loss as the loss that occurs in the drive motor of the electric vehicle. As a result, electrical steel sheets used as iron core materials have been increasingly required to reduce iron loss.

For the above reasons, a high-grade material with a Si content of 3.0 mass% or more and a thickness of 0.3 mm or less has been increasingly used as a non-oriented electrical steel sheet used for a drive motor of an electric vehicle, replacing the conventional low-grade material. Such an electrical steel sheet for an electric vehicle is required to have an extremely low iron loss value. Therefore, even a small variation in iron loss caused by the variation in the production conditions has a significant effect on product yield. Therefore, factors that could cause variation in iron loss should be eliminated as much as possible.

As a technology for reducing the iron loss in a non-oriented electrical steel sheet, for example, Patent Literature 1 proposes a technology for suppressing variation in iron loss in the width direction of the steel sheet by cooling the steel sheet during the cooling process of finishing annealing while maintaining the temperature of the steel sheet across its entire width to be within ±20°C of the temperature at the central portion of the steel sheet in the width direction until the temperature at the central portion of the steel sheet in the width direction reaches 600°C.

### Citation List

### Patent Literature

Patent Literature 1: JP-S63-047333A

### Summary of Invention

### Technical Problem

A finishing annealing facility for producing non-oriented electrical steel sheets typically includes a mechanism for adjusting the flow rate of a cooling gas in the width direction of a steel sheet, which allows an operator to adjust the flow rate of the gas in the width direction of the steel sheet so as to achieve a uniform temperature of the steel sheet. There has been a problem in that only the method disclosed in Patent Literature 1, that is, the technology for achieving uniform temperature of a steel sheet in the width direction during cooling, cannot stably reduce iron loss in the non-oriented electrical steel sheet.

The present invention was conceived in view of the above problem of the conventional technology and aims to propose a method for stably producing a non-oriented electrical steel sheet with lower iron loss compared to conventional steel sheets, as a high-quality material with a high Si content.

### Solution to Problem

To address the above problem, the inventors conducted intensive studies, focusing on the influence of impurities contained in a steel material as well as finishing annealing conditions on the iron loss properties. As a result, the inventors found that reducing iron loss in a high-quality material with a high Si content using conventional technology is challenging due to the formation of an oxide layer on the surface of a steel sheet during the finishing annealing and also that, in order to suppress the formation of such an oxide layer on the surface of the steel sheet during finishing annealing, i.e., to suppress the oxidation of the surface of the steel sheet, it is important to add Cu as a steel component and also to appropriately control the dew point of each of the furnace atmospheres in a heating zone and a soaking zone during the finishing annealing. As a result of these findings, the present invention has been achieved.

The present invention based on the above findings proposes a method for producing a non-oriented electrical steel sheet, including
hot-rolling a slab with a component composition including C: 0.005 mass% or less, Si: 3.0 to 5.0 mass%, Al: 3.0 mass% or less, Mn: 3.0 mass% or less, P: 0.10 mass% or less, S: 0.005 mass% or less, N: 0.005 mass% or less, Cu: 0.01 to 0.5 mass%, and O: 0.005 mass% or less, with the balance being Fe and unavoidable impurities;
performing hot-band annealing;
performing cold rolling involving one cold rolling pass, or two or more cold rolling passes with intermediate annealing between each cold rolling pass to obtain a cold-rolled sheet; and
performing finishing annealing using a continuous annealing line including a heating zone, a soaking zone, and a cooling zone, in which
the finishing annealing is performed by setting a dew point D_{H} of a furnace atmosphere in a region where the steel sheet temperature is in the range from 500°C to 800°C in the heating zone to -20°C or lower and also by setting a dew point D_{S} of the furnace atmosphere in a region where the steel sheet temperature is in the range from above 800°C to a soaking temperature in the heating zone, as well as in a region where the steel sheet is in the soaking zone, to -40°C or lower, while maintaining a relationship of D_{H}>D_{S}.

In the above method for producing a non-oriented electrical steel sheet of the present invention, the finishing annealing is performed by setting a dew point D_{C} of the furnace atmosphere in a region where the steel sheet temperature is in the range from the soaking temperature to 500°C in the cooling zone to -40°C or lower.

The slab used in the method for producing a non-oriented electrical steel sheet of the present invention further includes, in addition to the above component composition, at least one group of components selected from the following groups A to J:
- group A: at least one selected from the group consisting of Sn: 0.005 to 0.20 mass% and Sb: 0.005 to 0.20 mass%,
- group B: at least one selected from the group consisting of Ca: 0.001 to 0.010 mass%, Mg: 0.0002 to 0.005 mass%, and REM: 0.001 to 0.05 mass%,
- group C: Cr: 0.01 to 3.0 mass%,
- group D: Ni: 0.01 to 1 mass%,
- group E: at least one selected from the group consisting of Mo: 0 to 0.050 mass% and B: 0 to 0.0020 mass%,
- group F: at least one selected from a group consisting of Ti: 0 to 0.010 mass%, Nb: 0 to 0.0050 mass%, V: 0 to 0.050 mass%, Pb: 0 to 0.0020 mass%, Zr: 0 to 0.050 mass%, Ta: 0 to 0.0020 mass%, W: 0 to 0.050 mass%, Se: 0 to 0.0050 mass%, and Bi: 0 to 0.0020 mass%,
- group G: As: 0 to 0.020 mass%,
- group H: Zn: 0 to 0.010 mass%,
- group I: Co: 0 to 0.10 mass%, and
- group J: at least one selected from the group consisting of Ge: 0 to 0.030 mass% and Ga: 0 to 0.030 mass%.

The slab used in the method for producing a non-oriented electrical steel sheet of the present invention is a slab with a thickness ranging from 30 mm to 300 mm inclusive, produced by tapping molten steel from a converter or an electric furnace, adjusting components of the tapped molten steel, and then subjecting the molten steel to continuous casting.

### Advantageous Effects of Invention

The present invention achieves a stable production of a non-oriented electrical steel sheet with extremely low iron loss. Therefore, according to the present invention, it is possible to provide an iron core material that can be suitably used for a drive motor of an electric vehicle.

### Brief Description of Drawings

[Fig. 1] Fig. 1 is a graph illustrating the influence of an oxygen weight per unit area of the surface of a steel sheet subjected to finishing annealing on the iron loss W_{17/200}.
[Fig. 2] Fig. 2 is a graph illustrating the influence of the dew point D_{H} of the furnace atmosphere in a region where the steel sheet temperature is in the range from 500°C to 800°C in a heating zone and a dew point D_{S} of a furnace atmosphere in a region where the steel sheet temperature is in the range from above 800°C to a soaking temperature in the heating zone, as well as in a region where the steel sheet is in a soaking zone in a finishing annealing facility, upon an oxygen weight per unit area of the surface of the steel sheet.
[Fig. 3] Fig. 3 is a graph illustrating the influence of a Cu content upon an oxygen weight per unit area of the surface of the steel sheet subjected to finishing annealing.
[Fig. 4] Fig. 4 is a graph illustrating the influence of the dew point D_{C} of the atmosphere in a cooling zone of the finishing annealing facility on the oxygen weight per unit area of the surface of the steel sheet subjected to the finishing annealing.

### Description of Embodiments

First, experiments conducted to develop the present invention will be described.

### <Experiment 1>

A slab with a component composition including C: 0.0015 mass%, Si: 3.32 mass%, Mn: 0.51 mass%, P: 0.009 mass%, S: 0.0012 mass%, Al: 0.63 mass%, N: 0.0015 mass%, Cu: 0.05 mass%, and O: 0.0012 mass%, with the balance being Fe and unavoidable impurities, was hot-rolled to obtain a hot-rolled sheet with a thickness of 1.8 mm. The hot-rolled sheet was subjected to hot-band annealing at a soaking temperature of 980°C, pickled for descaling, and then cold-rolled to produce a cold-rolled sheet with a thickness of 0.25 mm. The cold-rolled sheet was then subjected to finishing annealing using a continuous annealing line (finishing annealing facility) including a heating zone, a soaking zone, and a cooling zone, in which the heating rate from 500°C to the soaking temperature during heating is 15°C/s, the soaking temperature is 980°C, and the soaking time is 20 seconds. In this process, the furnace atmosphere in both the heating zone and the soaking zone was a mixed gas of H₂:N₂=20:80 in vol% ratio, and the dew point of the furnace atmosphere in the soaking zone was -35°C. Meanwhile, the furnace atmosphere in the cooling zone was an N₂ gas, and the cooling rate in the temperature range from the soaking temperature to 500°C was 15°C/s. It should be noted that the heating rate and the cooling rate in the finishing annealing of the present invention refer to the average heating rate and the average cooling rate, respectively (the same hereinafter).

The iron loss properties of the steel sheet obtained after the finishing annealing were evaluated. The evaluation results indicate that the iron loss value greatly varies depending on the timing during production and is particularly large under measurement conditions where both the magnetic flux density and the frequency are high. In the present invention, therefore, the iron loss properties were evaluated based on the iron loss W_{17/200} at the maximum magnetic flux density of 1.7 T and a frequency of 200 Hz, at which considerable variations in the iron loss value were indicated. It should be noted that such iron loss measurement conditions correspond to conditions where both the excitation current and the number of revolutions of the motor are high, particularly when an electric vehicle is climbing a slope at a relatively high speed, for example. The high iron loss value would cause a problem in that the temperature of the motor core will increase, demagnetizing the rare earth magnet.

The inventors analyzed the oxygen content in the steel sheet after the finishing annealing to investigate the causes of the considerable variations in the iron loss W_{17/200} that depend on the production timing. Then, after subtracting the oxygen content (0.0012 mass%) at the time of tapping from the obtained oxygen content, the inventors converted the result into an oxygen content per 1 m² (the unit: g/m²) of the surface (both sides) of the steel sheet. Note that in the present invention, such an oxygen content is referred to as an "oxygen weight per unit area."

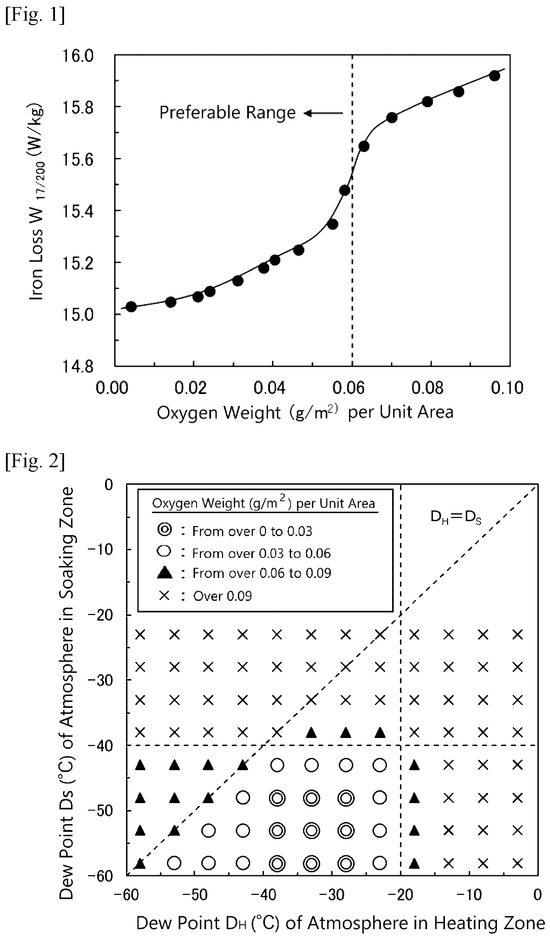

Fig. 1 illustrates the relationship between the oxygen weight per unit area and the iron loss W_{17/200}. Fig. 1 shows that the steel sheet with a higher iron loss value has a large oxygen weight per unit area, and particularly, the iron loss value is higher in a region where the oxygen weight per unit area is over 0.06 g/m². As a result of observing a cross-section of the steel sheet with a high oxygen weight per unit area with a SEM, Si oxide and Al oxide were confirmed around the surface layer of the steel sheet and considered to be the cause of the increase in iron loss.

The inventors consider the phenomenon as follows. Under the iron loss measurement conditions at a common commercial frequency band, such as W_{15/50}, even if a thin oxide layer is formed around the surface layer, it has little influence on the iron loss, because the region is not so excited due to the low magnetic permeability. However, under the measurement conditions where the maximum magnetic flux density is high, even a region of low magnetic permeability around the surface layer of the steel sheet is excited, and also, the magnetic flux density of the surface of the steel sheet is likely to increase at a higher frequency due to the skin effect. Therefore, at W_{17/200}, even a small amount of oxide on the surface layer significantly affects the iron loss.

To suppress an increase in iron loss, first, the inventors conducted further studies, focusing initially on the conditions of finishing annealing performed with a continuous annealing line including a heating zone, a soaking zone, and a cooling zone. Specifically, the inventors conceived an idea of separately controlling furnace atmospheres in the heating zone and the soaking zone of the finishing annealing facility and thus conducted experiments to confirm its influence.

Fig. 2 shows the experiment results as the influence of the dew point of each of the furnace atmospheres in the heating zone and the soaking zone on the oxygen weight per unit area of the surface of the steel sheet. It should be noted that the dew point D_{H} shown in Fig. 2 indicates the dew point of the furnace atmosphere in the region where the steel sheet temperature is in the range from 500°C to 800°C in the heating zone. Also, the dew point D_{S} indicates the dew point of the furnace atmosphere in the region where the steel sheet temperature is in the range from above 800°C to the soaking temperature in the heating zone, as well as in the region where the steel sheet is in the soaking zone. Fig. 2 shows that the oxygen weight per unit area of the surface of the steel sheet can be reduced to 0.06 g/m² or less when the following condition is satisfied: the dew point D_{H} is -20°C or lower, the dew point D_{S} is -40°C or lower, and D_{H} and D_{S} satisfy the relationship of D_{H}>D_{S}. In the present invention, the dew point D_{H} of the furnace atmosphere in the region where the steel sheet temperature is in the range from 500°C to 800°C in the heating zone is hereinafter referred to as the "dew point D_{H} of the heating zone," and the dew point D_{S} of the furnace atmosphere in the region where the steel sheet temperature is in the range from above 800°C to the soaking temperature in the heating zone, as well as in the region where the steel sheet is in the soaking zone is hereinafter referred to as the "dew point D_{S} of the soaking zone."

The inventors consider that the reason why the oxygen weight per unit area of the surface of the steel sheet decreases when the relationship, the dew point D_{H} of the heating zone > the dew point D_{S} of the soaking zone is satisfied as described above, is as follows. That is, when the dew point of the atmosphere is high at an initial stage of heating, Si oxide and Al oxide, which are very thin and have high barrier properties, are formed on the surface of the steel sheet, conversely suppressing oxidation in the soaking zone.

### <Experiment 2>

Next, the inventors conducted the following experiments to examine how impurities in the steel sheet influence the oxygen weight per unit area of the surface of the steel sheet.

A slab with the same component composition as that in <Experiment 1> above (excluding Cu), containing Cu at a varying content in the range from 0.003 to 0.5 mass% was hot-rolled to obtain a hot-rolled sheet with a thickness of 1.6 mm. The hot-rolled sheet was subjected to hot-band annealing at a soaking temperature of 1020°C and then pickled for descaling. The pickled hot-rolled sheet was then cold-rolled to produce a cold-rolled sheet with a thickness of 0.25 mm. The cold-rolled sheet was subjected to finishing annealing, in which the heating rate in the temperature range from 500°C to the soaking temperature during the heating process was 25°C/s, the soaking temperature was 1010°C, and the soaking time was 10 seconds. In the finishing annealing, the furnace atmospheres in the heating zone and the soaking zone were each set to a mixed gas of H₂:N₂=30:70 (vol% ratio), the dew point D_{H} of the heating zone was set to -35°C, and the dew point D_{S} of the soaking zone was set to -50°C. Meanwhile, the furnace atmosphere in the cooling zone was set to an N₂ gas, and the cooling rate in the temperature range from the soaking temperature to 500°C was set to - 30°C/s.

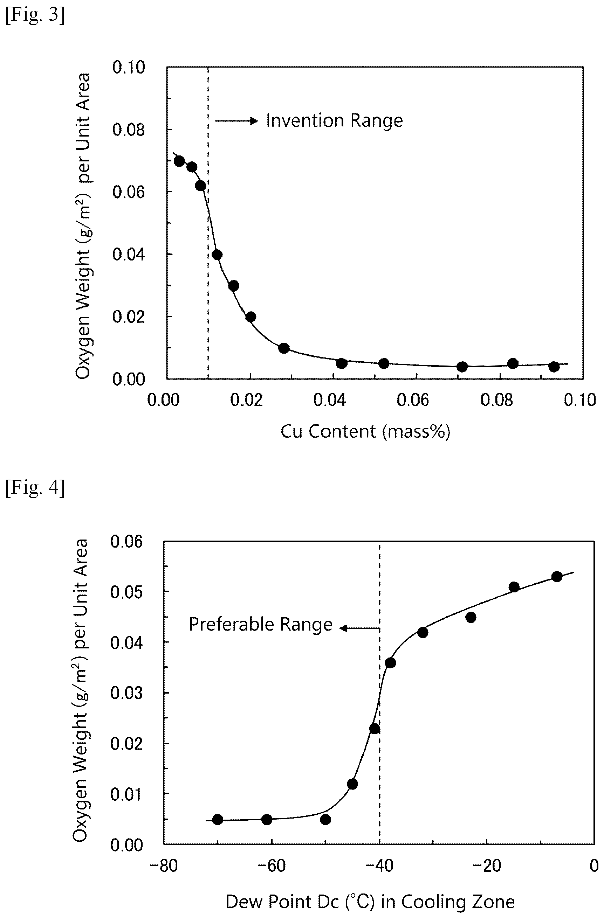

A sample material was obtained from the steel sheet subjected to the finishing annealing. Then, the oxygen weight per unit area of the surface of the steel sheet was measured as in <Experiment 1>. Fig. 3 shows the influence of the Cu content on the oxygen weight per unit area of the surface of the steel sheet. As can be seen from Fig. 3, an addition of 0.01 mass% or more of Cu can significantly suppress the oxidation of the surface of the steel sheet during the finishing annealing.

The mechanism involved has not yet been fully understood. However, it is believed that the element Cu, which is less likely oxidized than Fe, concentrates on the surface of the iron matrix by atmospheric oxidation or pickling, and thus plays the role of promoting the formation of an oxide film with high barrier properties in the finishing annealing. Although Fig. 3 does not show the results when the Cu content is between 0.10 and 0.50 mass%, there is no significant variation in the oxygen weight per unit area in such a range, and it was thus about 0.005 g/m².

### <Experiment 3>

Next, the inventors have conducted the following experiments to examine how the dew point of the furnace atmosphere in the cooling zone during the finishing annealing influences the oxygen weight per unit area of the surface of the steel sheet after the finishing annealing.

A slab with a component composition including C: 0.0011 mass%, Si: 3.54 mass%, Mn: 0.56 mass%, P: 0.005 mass%, S: 0.0009 mass%, Al: 0.81 mass%, N: 0.0012 mass%, Cu: 0.05 mass%, and O: 0.0006 mass%, with the balance being Fe and unavoidable impurities, was hot-rolled to obtain a hot-rolled sheet with a thickness of 1.7 mm. The hot-rolled sheet was subjected to hot-band annealing at a soaking temperature of 900°C, pickled for descaling, and then cold-rolled to obtain a cold-rolled sheet with a thickness of 0.25 mm. The cold-rolled sheet was subjected to finishing annealing, in which the heating rate in the temperature range from 500°C to the soaking temperature during the heating process was 30°C/s, the soaking temperature was 1000°C, and the soaking time was 5 seconds. In the finishing annealing, the atmospheres in the heating zone and the soaking zone were each set to a mixed gas of H₂:N₂=20:80 (vol% ratio), the dew point D_{H} of the heating zone was set to -35°C, and the dew point D_{S} of the soaking zone was set to -54°C. Meanwhile, the atmosphere in the cooling zone was set to an N₂ gas, and the cooling rate in the temperature range from the soaking temperature to 500°C was set to 15°C/s. Further, the dew point D_{C} of the furnace atmosphere in the cooling zone was varied between 0°C and -70°C.

A sample material was taken from the steel sheet subjected to the finishing annealing. The oxygen weight per unit area of the surface of the steel sheet was then measured as in <Experiment 1>. Fig. 4 shows the results, which indicate that the oxygen weight per unit area suddenly increases when the dew point D_{C} of the furnace atmosphere in the cooling zone exceeds -40°C and that the oxygen weight per unit area of the surface of the steel sheet can be further reduced by setting the dew point D_{C} to be -40°C or lower.

The present invention has been developed based on the findings described above with further studies conducted thereon.

Next, the component composition of a steel material (slab) used to produce the non-oriented electrical steel sheet of the present invention will be described.

### C: 0.005 mass% or less

If a large amount of C is contained in the product sheet, it can lead to magnetic aging. In such a case, if a motor is used at a high temperature for a long time, carbide is precipitated, resulting in increased iron loss. Therefore, the C content is limited to 0.005 mass% or less, preferably to 0.003 mass% or less.

### Si: 3.0 to 5.0 mass%

Si is an element that increases the specific resistance of steel and thus reduces iron loss. Since a drive motor for an electric vehicle requires extremely low iron loss, Si needs to be added in an amount of 3.0 mass% or more. However, if the Si content exceeds 5.0 mass%, cold rolling becomes considerably difficult. Therefore, the upper limit of the Si content should be 5.0 mass%. Preferably, it should be in the range from 3.5 to 4.5 mass%.

### Mn: 3.0 mass% or less

Mn is an element that not only improves hot workability but also increases the specific resistance of steel, thus reducing iron loss. Therefore, Mn may be added as required. Preferably, the Mn content should be 0.01 mass% or more. However, if the Mn content exceeds 3.0 mass%, the magnetic flux density is conversely reduced and/or iron loss increases. Therefore, the upper limit of the Mn content is 3.0 mass%. Preferably, the Mn content should be in the range from 0.3 to 2.0 mass%.

### P: 0.10 mass% or less

P is an element that hardens steel to cause embrittlement. In particular, when the P content exceeds 0.10 mass%, cold rolling becomes difficult. Therefore, in the present invention, the P content is limited to 0.10 mass% or less, preferably to 0.03 mass% or less. It should be noted that when P is used to increase the strength of steel or improve punchability, the P content is preferably in the range from 0.03 to 0.07 mass%.

### S: 0.005 mass% or less

S is a detrimental element that forms sulfide to hinder grain growth, increasing iron loss. This effect becomes pronounced particularly when the S content exceeds 0.005 mass%. Therefore, the S content is limited to 0.005 mass% or less. Preferably, the S content should be 0.003 mass% or less.

### Al: 3.0 mass% or less

Al, similar to Si, is an element that increases the specific resistance of steel and thus reduces iron loss and may be added as appropriate. However, when the Al content exceeds 3.0 mass%, cold rolling becomes difficult. Therefore, the upper limit of the Al content is 3.0 mass%. Preferably, it should be in the range from 0.3 to 2.0 mass%.

### N: 0.005 mass% or less

N is a detrimental element that forms nitride to hinder grain growth, thus increasing iron loss. This effect is particularly pronounced when the N content exceeds 0.005 mass%. Therefore, the N content is limited to 0.005 mass% or less, preferably to 0.003 mass% or less.

### Cu: 0.01 to 0.5 mass%

Cu has the effect of suppressing oxidation of the surface of the steel sheet during finishing annealing, thus preventing an increase in iron loss. This effect can be obtained when Cu is added at 0.01 mass% or more. However, when the Cu content exceeds 0.5 mass%, this effect becomes saturated, increasing the alloying costs, and is also likely to cause hot brittleness Therefore, the Cu content should be in the range from 0.01 to 0.5 mass%, preferably in the range from 0.02 to 0.2 mass%.

Cu is a type of tramp element unavoidably mixed from raw material. It is known that scrap supplied in a steelmaking step becomes a Cu source. When a slab is produced by melting scrap in an electric furnace, the Cu content naturally becomes high even if no Cu is added. This reduces the raw material costs. In addition, a method that involves the use of an electric furnace is preferable from the viewpoint of reducing CO₂ emissions.

### O: 0.005 mass% or less

O is a detrimental element that forms oxide to hinder grain growth, thus increasing iron loss. This effect becomes particularly pronounced when the O content exceeds 0.005 mass%. Therefore, the O content is limited to 0.005 mass% or less, preferably to 0.003 mass% or less.

The steel material used in the present invention contains the above components, with the balance being substantially Fe and unavoidable impurities. It should be noted that in the present invention, the steel material may further contain at least one group of components selected from the following groups A to J to have improved magnetic properties and mechanical characteristics.

### Group A: at least one selected from the group consisting of: Sn: 0.005 to 0.20 mass% and Sb: 0.005 to 0.20 mass%

Each of Sn and Sb is an element effective in improving the texture and thus reducing iron loss. These effects are achieved when each element is added in an amount of 0.005 mass% or more. However, these effects reach saturation when the content of each element exceeds 0.20 mass%. Therefore, at least one of Sn and Sb should be added in an amount in the range from 0.005 to 0.20 mass%, preferably in an amount in the range from 0.01 to 0.10 mass%.

### Group B: at least one selected from the group consisting of: Ca: 0.001 to 0.010 mass%, Mg: 0.0002 to 0.005 mass%, and REM: 0.001 to 0.05 mass%

Each of Ca, Mg, and REM is an element that improves grain growth by forming stable sulfide and reducing fine sulfide particles, thereby reducing iron loss. This effect is not sufficiently achieved when the content of each element is less than its lower limit described above. Meanwhile, this effect is saturated when the content of each element is over its upper limit described above. Therefore, at least one of Ca, Mg, and REM should be contained in the following range: Ca: 0.001 to 0.010 mass%, Mg: 0.0002 to 0.005 mass%, and REM: 0.001 to 0.05 mass%. Preferably, at least one selected from the group consisting of Ca, Mg, and REM should be contained in the following range: Ca: 0.002 to 0.005 mass%, Mg: 0.0005 to 0.002 mass%, and REM: 0.005 to 0.03 mass%.

### Group C: Cr: 0.01 to 3.0 mass%

Cr is an element that increases the specific resistance of steel and thus reduces iron loss. To achieve this effect, Cr is preferably added in an amount of 0.01 mass% or more. Meanwhile, when the Cr content exceeds 3.0 mass%, the iron loss deteriorates, and raw material costs increase. Preferably, the upper limit of the Cr content should be 3.0 mass%. Preferably, the Cr content should fall within the range from 0.03 to 2.0 mass%.

### Group D: Ni: 0.01 to 1 mass%

Ni is an element that improves the toughness of steel. To achieve this effect, Ni should be added at 0.01 mass% or more. Meanwhile, when the Ni content exceeds 1 mass%, this effect is saturated and the raw material cost increases. Therefore, the upper limit of the Ni content should be 1 mass%. Preferably, the Ni content should be in the range from 0.05 to 0.5 mass%.

### Group E: at least one selected from the group consisting of Mo: 0 to 0.050 mass% and B: 0 to 0.0020 mass%

Each of Mo and B has the effect of suppressing the brittle fracture of steel. To reliably achieve this effect, it is preferable to add Mo and B at 0.001 mass% or more and 0.0001 mass% or more, respectively. Meanwhile, when the Mo content exceeds 0.050 mass%, carbide is precipitated, increasing the iron loss. Similarly, when the B content exceeds 0.0020 mass%, nitride is precipitated, which increases the iron loss. Therefore, the upper limit of the Mo content should be 0.050 mass%, and the upper limit of the B content should be 0.0020 mass%. Preferably, the Mo content should be in the range from 0.010 to 0.030 mass%, and the B content should be in the range from 0.0003 to 0.0010 mass%.

### Group F: at least one selected from the group consisting of Ti: 0 to 0.010 mass%, Nb: 0 to 0.0050 mass%, V: 0 to 0.050 mass%, Pb: 0 to 0.0020 mass%, Zr: 0 to 0.050 mass%, Ta: 0 to 0.0020 mass%, W: 0 to 0.050 mass%, Se: 0 to 0.0050 mass%, and Bi: 0 to 0.0020 mass%

Each of Ti, Nb, V, Pb, Zr, Ta, W, Se, and Bi may be added as required, since these elements improve the workability of steel and contribute to increasing the strength of the steel. To achieve these effects effectively, it is preferable to add each of Ti, V, Zr, and W at 0.001 mass% or more and each of Nb, Pb, Ta, Se, and Bi at 0.0001 mass% or more. However, since each of these elements increases the iron loss, the upper limit of each element is preferably as follows: Ti: 0.010 mass%, Nb: 0.0050 mass%, V: 0.050 mass%, Pb: 0.0020 mass%, Zr: 0.050 mass%, Ta: 0.0020 mass%, W: 0.050 mass%, Se: 0.0050 mass%, and Bi: 0.0020 mass%. Preferably, each content should be in the following range: Ti: 0.003 to 0.006 mass%, Nb: 0.0005 to 0.0030 mass%, V: 0.005 to 0.020 mass%, Pb: 0.0003 to 0.0010 mass%, Zr: 0.005 to 0.020 mass%, Ta: 0.0003 to 0.0010 mass%, W: 0.005 to 0.020 mass%, Se: 0.0005 to 0.0030 mass%, and Bi: 0.0003 to 0.0010 mass%.

### Group G: As: 0 to 0.020 mass%

As has the effect of increasing the hardness of steel and thus may be added to adjust the mechanical properties. To reliably achieve such an effect, it is preferable to add As at 0.001 mass% or more. However, As embrittles steel, and the embrittlement becomes significant when the As content exceeds 0.020 mass%. Therefore, the upper limit of the As content should be 0.020 mass%. Preferably, the As content should be in the range from 0.003 to 0.010 mass%.

### Group H: Zn: 0 to 0.010 mass%

Zn has the effect of reducing iron loss by coarsening inclusions. To achieve this effect reliably, it is preferable to add Zn at 0.001 mass% or more. However, since Zn has a high vapor pressure, the production costs increase when the Zn content exceeds 0.010 mass%. Therefore, the upper limit of the Zn content should be o 0.010 mass%. Preferably, the Zn content should be in the range from 0.002 to 0.006 mass%.

### Group I: Co: 0 to 0.10 mass%

Co is an element that has the effect of increasing the magnetic flux density. To achieve this effect reliably, Co is preferably added at 0.001 mass% or more. However, since Co is an expensive element, the production costs increase when an excessive amount of Co is added. Therefore, the upper limit of the Co content should be 0.10 mass%. Preferably, the Co content should be in the range from 0.01 to 0.05 mass%.

### Group J: at least one selected from the group consisting of Ge: 0 to 0.030 mass% and Ga: 0 to 0.030 mass%

Each of Ge and Ga may be added because they improve texture. To achieve this effect reliably, each element should be added at 0.001 mass% or more. However, this effect is saturated if the content of each element exceeds 0.030 mass%. Therefore, the upper limit of the content of each element should be 0.030 mass%. Preferably, the content of each element should be in the range from 0.003 to 0.010 mass%.

Next, the method for producing a non-oriented electrical steel sheet of the present invention will be described.

A steel material (slab) used to produce the non-oriented electrical steel sheet of the present invention can be produced using a known method. For example, molten steel obtained by using a furnace such as a converter or an electric furnace is subjected to secondary refining such as vacuum degassing treatment, as appropriate, to have a component composition in accordance with the present invention. The steel is then subjected to continuous casting to produce a slab with a thickness ranging from 30 mm to 300 mm. A slab with a thickness of less than 30 mm is difficult to produce by continuous casting, while a slab with a thickness of more than 300 mm is difficult to hot roll. Therefore, the thickness of the slab is preferably in the range from 100 to 250 mm.

From the viewpoint of reducing CO₂ emissions, an electric furnace process is preferable because it uses scrap as a steel raw material (iron source) instead of pig iron from a blast furnace. Additionally, when producing a slab by melting scrap in an electric furnace, the Cu content increases due to Cu contained in the scrap, which is advantageous because the cost of adding Cu can be reduced. Note that direct reduced iron may also be used as an iron source in addition to scrap.

The slab is heated to a predetermined temperature and then hot-rolled into a hot-rolled sheet. Herein, the heating temperature of the slab performed prior to the hot rolling should be in the range from 1000 to 1200°C. When the temperature exceeds 1200°C, some precipitates are dissolved, increasing iron loss. Meanwhile, when the temperature is less than 1000°C, the deformation resistance of the slab increases, making it difficult to hot roll the slab.

The thickness of the hot-rolled sheet should be in the range from 1.0 to 3.0 mm. When the thickness of the hot-rolled sheet is less than 1.0 mm, it becomes difficult to maintain the favorable shape of the steel sheet after the hot rolling, while when the thickness is more than 3.0 mm, it becomes difficult to cold-roll the steel sheet. Hot rolling may also be performed using a known thin slab caster which integrates a continuous casting line with a rolling facility.

The hot-rolled sheet is subjected to hot-band annealing, in which the soaking temperature of the hot-band annealing should be in the range from 800 to 1100°C. When the temperature is lower than 800°C, it is difficult to sufficiently recrystallize the hot-rolled sheet and the effect of improving the magnetic properties cannot be obtained sufficiently. Meanwhile, when the temperature is higher than 1100°C, the effect of improving the magnetic properties is saturated. Preferably, the temperature should be in the range from 900 to 1050°C.

After the hot-band annealing, the steel sheet is descaled by, for example, pickling and then cold rolled to produce a cold-rolled sheet with a final thickness (product sheet thickness). The final thickness should be 0.30 mm or less. When the final thickness is more than 0.30 mm, eddy current loss increases, with the result that excellent iron loss properties cannot be achieved. Preferably, the final thickness should be 0.25 mm or less. Meanwhile, as the thickness is smaller, the iron loss value decreases, but productivity through a rolling line and the like significantly decreases. Therefore, the lower limit of the thickness is preferably about 0.10 mm.

The rolling mill used for cold rolling may be a known facility such as a reverse rolling mill or a tandem rolling mill. From the viewpoint of improving the magnetic properties and reducing the cold rolling load, cold rolling may be performed a plurality of times with intermediate annealing performed between each cold rolling pass. The soaking temperature of the intermediate annealing should be in the range from 900 to 1100°C. When the soaking temperature is below 900°C, only a small effect of improving the magnetic properties is obtained, while when the soaking temperature exceeds 1100°C, the effect of improving the magnetic properties is saturated.

The cold-rolled sheet of the final thickness is subjected to finishing annealing using a continuous annealing line (finishing annealing facility) including a heating zone, a soaking zone, and a cooling zone. The resulting sheet is then covered with an insulation coating if required to produce a product sheet. Herein, it is preferable to conduct the finishing annealing at a soaking temperature of 900 to 1100°C for a soaking time of 1 to 120 seconds. At the soaking temperature below 900°C, it is difficult to sufficiently grow grains, and excellent iron loss properties cannot be obtained. Meanwhile, when the soaking temperature exceeds 1100°C, the effect of reducing iron loss reaches saturation, and the thermal energy costs increase. When the soaking time is less than 1 second, it is difficult to achieve uniform temperature distribution of the sheet in the width direction, while when the soaking time is more than 120 seconds, the effect of reducing iron loss is saturated. A known non-oxidizing atmospheric gas can be used for each of the furnace atmospheres in the heating zone, soaking zone, and cooling zone of the finishing annealing facility. For example, an H₂ gas, an N₂ gas, an Ar gas, a CO gas, or a mixture of two or more of these gases can be suitably used.

In the present invention, it is essential to appropriately control the dew point of each of the atmospheres in the heating zone and soaking zone of the finishing annealing facility. Specifically, it is necessary that the dew point D_{H} of the heating zone, i.e., the dew point of the atmosphere in the region where the steel sheet temperature is in the range from 500°C to 800°C in the heating zone is -20°C or lower, and that the dew point Dₛ of the soaking zone, i.e., the dew point of the atmosphere in the region where the steel sheet temperature is in the range from above 800°C to the soaking temperature in the heating zone, as well as in the region where the steel sheet is in the soaking zone is -40°C or lower, while maintaining the relationship of the dew points D_{H} and D_{S}: D_{H}>D_{S}. When the dew point of the atmosphere in each temperature region is higher than the upper limit, the surface of the steel sheet is oxidized, increasing the iron loss. Further, if the relationship D_{H}≤D_{S} is satisfied, an oxide film with high barrier properties is not formed during heating, and internal oxidation is promoted at a higher temperature, increasing the iron loss. Note that when there is a variation in the dew point in each temperature region, the maximum value of the dew point in each temperature region is defined as D_{H} or D_{S}.

Note that the dew point D_{H} of the heating zone is preferably in the range from -40°C to -25°C. When the dew point D_{H} of the heating zone is in such a preferable range, the dew point D_{S} of the soaking zone is preferably in the range from -40°C or lower. Although the lower limit of each of D_{H} and D_{S} is not specified, it is preferably about -70°C, because it is difficult to reduce the dew point of the atmosphere to less than -70°C in a continuous annealing line using an industrial gas.

It is also crucial to control the dew point D_{C} of the furnace atmosphere in the cooling zone during the finishing annealing. Preferably, the dew point D_{C} is controlled to be -40°C or lower. Herein, the dew point D_{C} refers to the dew point of the furnace atmosphere in a region where the steel sheet is cooled from the soaking temperature to 500°C. Controlling the dew point D_{C} to be -40°C or lower can stably reduce the oxygen weight per unit area on the surface of the steel sheet. This further reduces the iron loss. The dew point D_{C} should be -45°C or lower, and preferably -50°C or lower. Note that when the dew point varies in the above region, the maximum value of the dew point in the region is defined as D_{C}.

The steel sheet subjected to the finishing annealing as described above is covered with an insulation coating, if required, to produce a product sheet. The insulation coating is not limited to a specific coating and may be an inorganic coating, an organic coating, or a mixture thereof.

### Example

Molten steel tapped from a converter using pig iron from a blast furnace as an iron source was subjected to secondary refining by a vacuum degassing apparatus to produce steel with a component composition including various components as shown in Table 1 with the balance being Fe and unavoidable impurities. The steel was then subjected to continuous casting to produce a slab with a thickness of 140 mm. Similarly, a slab (No. 19 in Table 1) was produced using molten steel tapped from an electric furnace using scrap as an iron source. The slab was heated to 1100°C for 30 minutes and then hot-rolled into a hot-rolled sheet with a thickness of 1.6 mm. The hot-rolled sheet was then subjected to hot-band annealing at 980°C for 30 seconds, pickled for descaling, and then cold-rolled once to produce a cold-rolled sheet with a final thickness of 0.25 mm. It should be noted that, for a steel sheet of No. 18 in Table 1, a first cold rolling pass was performed to reach an intermediate thickness of 1.1 mm, followed by intermediate annealing at 1100°C for 30 seconds, and a second cold rolling pass was performed to achieve the final thickness of a cold-rolled sheet.

The cold-rolled sheet was then subjected to finishing annealing, also under the conditions described in Table 1, using a continuous annealing line including a heating zone, a soaking zone, and a cooling zone, to obtain a product sheet. The finishing annealing involves heating the sheet to the soaking temperature shown in Table 1, with the atmospheres in the heating zone and the soaking zone each set to a mixed gas of H₂:N₂=30:70 (vol% ratio), and with the heating rate in the temperature range from 500°C to the soaking temperature set to 20°C/s, and then holding the sheet at the soaking temperature for 10 seconds, followed by cooling the sheet. The cooling was performed under a nitrogen gas atmosphere, with the cooling rate in the temperature range from the soaking temperature to 500°C set to 20°C/s. At this time, the dew point D_{H} of the furnace atmosphere in the region where the steel sheet temperature is in the range from 500°C to 800°C in the heating zone; the dew point D_{S} of the furnace atmosphere in the region where the steel sheet temperature is in the range from above 800°C to the soaking temperature in the heating zone, as well as in the region where the steel sheet is in the soaking zone; and the dew point D_{C} of the furnace atmosphere in the region where the steel sheet temperature is in the range from the soaking temperature to 500°C in the cooling zone were changed variously as shown in Table 1.

A specimen with a width of 30 mm and a length of 280 mm with a longitudinal direction along with the rolling direction was obtained from the steel sheet (product sheet) after the finishing annealing. The specimen was subjected to an Epstein test to measure the iron loss W_{17/200}, so that a specimen with an iron loss W_{17/200} of 15.5 W/kg or less was classified as an example of the invention, while a specimen with an iron loss W_{17/200} of more than 15.5 W/kg was classified as a comparative example. In addition, the steel sheet (product sheet) subjected to the finishing annealing was subjected to chemical analysis to measure the oxygen content. The measured oxygen content was then converted into an oxygen weight per unit area of the surface of the steel sheet using the method described above.

The measurement results are also shown in Table 1. It is observed that each of the steel sheets produced under the conditions of the present invention has a low oxygen weight per unit area of the surface of the steel sheet, and indicates a favorable iron loss value. It should be noted that the steel sheet of No. 20 in Table 1, which has been produced from steel tapped from an electric furnace, has a Cu content of 0.045 mass% due to Cu mixed into the steel from scrap, without the need of separately adding Cu. Thus, the advantageous effects of the present invention are obtained. In addition, the steel sheet of No. 19, which was obtained by performing intermediate annealing between each cold rolling pass, has an iron loss value further improved by the improvement of the texture.

**[Table 1-1]**

| Steel Sheet No. | Component Composition of Steel (mass%) | | | | | | | | | | Finishing Annealing Conditions | | | | Steel Sheet Properties | | Remarks |
|---|---|---|---|---|---|---|---|---|---|---|---|---|---|---|---|---|---|
| | C | Si | Mn | P | S | Al | N | Cu | O | Others | Soaking Temperature (°C) | Dew Point (°C) of Atmosphere | | | Oxygen Weight (g/m²) Per Unit Area | Iron Loss W_{17/200} (W/kg) | |
| | | | | | | | | | | | | D_{H} | D_{S} | D_{C} | | | |
| 1 | 0.0015 | 3.32 | 0.52 | 0.01 | 0.0014 | 0.62 | 0.0011 | 0.052 | 0.0011 | - | 1000 | -35 | -35 | -58 | 0.091 | 15.9 | Comparative Example |
| 2 | 0.0015 | 3.32 | 0.52 | 0.01 | 0.0014 | 0.62 | 0.0011 | 0.052 | 0.0011 | - | 1000 | -58 | -55 | -57 | 0.063 | 15.6 | Comparative Example |
| 3 | 0.0015 | 3.32 | 0.52 | 0.01 | 0.0014 | 0.62 | 0.0011 | 0.052 | 0.0011 | - | 1000 | -46 | -41 | -57 | 0.065 | 15.6 | Comparative Example |
| 4 | 0.0015 | 3.32 | 0.52 | 0.01 | 0.0014 | 0.62 | 0.0011 | 0.052 | 0.0011 | - | 1000 | -38 | -35 | -56 | 0.089 | 15.8 | Comparative Example |
| 5 | 0.0015 | 3.32 | 0.52 | 0.01 | 0.0014 | 0.62 | 0.0011 | 0.052 | 0.0011 | - | 1020 | -45 | -56 | -55 | 0.041 | 15.3 | Invention Example |
| 6 | 0.0015 | 3.32 | 0.52 | 0.01 | 0.0014 | 0.62 | 0.0011 | 0.052 | 0.0011 | - | 1000 | -34 | -57 | -57 | 0.005 | 15.0 | Invention Example |
| 7 | 0.0015 | 3.32 | 0.52 | 0.01 | 0.0014 | 0.62 | 0.0011 | 0.052 | 0.0011 | - | 1000 | -55 | -68 | -68 | 0.032 | 15.2 | Invention Example |
| 8 | 0.0015 | 3.32 | 0.52 | 0.01 | 0.0014 | 0.62 | 0.0011 | 0.052 | 0.0011 | - | 1000 | -38 | -68 | -65 | 0.004 | 15.0 | Invention Example |
| 9 | 0.0015 | 3.32 | 0.52 | 0.01 | 0.0014 | 0.62 | 0.0011 | 0.052 | 0.0011 | - | 930 | -36 | -55 | -56 | 0.008 | 15.1 | Invention Example |
| 10 | 0.0015 | 3.32 | 0.52 | 0.01 | 0.0014 | 0.62 | 0.0011 | 0.052 | 0.0011 | - | 1000 | -25 | -56 | -57 | 0.018 | 15.1 | Invention Example |
| 11 | 0.0015 | 3.32 | 0.52 | 0.01 | 0.0014 | 0.62 | 0.0011 | 0.052 | 0.0011 | - | 1000 | -36 | -57 | -42 | 0.016 | 15.1 | Invention Example |
| 12 | 0.0015 | 3.32 | 0.52 | 0.01 | 0.0014 | 0.62 | 0.0011 | 0.052 | 0.0011 | - | 1000 | -37 | -55 | -36 | 0.025 | 15.2 | Invention Example |
| 13 | 0.0015 | 3.32 | 0.52 | 0.01 | 0.0014 | 0.62 | 0.0011 | 0.052 | 0.0011 | - | 1010 | -35 | -48 | -25 | 0.038 | 15.3 | Invention Example |
| 14 | 0.0015 | 3.32 | 0.52 | 0.01 | 0.0014 | 0.62 | 0.0011 | 0.052 | 0.0011 | - | 1000 | -21 | -62 | -56 | 0.023 | 15.2 | Invention Example |
| 15 | 0.0015 | 3.32 | 0.52 | 0.01 | 0.0014 | 0.62 | 0.0011 | 0.052 | 0.0011 | - | 990 | -18 | -52 | -58 | 0.095 | 15.9 | Comparative Example |
| 16 | 0.0015 | 3.32 | 0.52 | 0.01 | 0.0014 | 0.62 | 0.0011 | 0.052 | 0.0011 | - | 1010 | -33 | -42 | -58 | 0.028 | 15.2 | Invention Example |
| 17 | 0.0015 | 3.32 | 0.52 | 0.01 | 0.0014 | 0.62 | 0.0011 | 0.052 | 0.0011 | - | 1000 | -30 | -36 | -57 | 0.095 | 15.8 | Comparative Example |
| 18 | 0.0015 | 3.32 | 0.52 | 0.01 | 0.0014 | 0.62 | 0.0011 | 0.052 | 0.0011 | - | 1000 | -53 | -35 | -56 | 0.088 | 15.7 | Comparative Example |
| 19 | 0.0015 | 3.32 | 0.52 | 0.01 | 0.0014 | 0.62 | 0.0011 | 0.052 | 0.0011 | - | 1000 | -37 | -56 | -58 | 0.006 | 14.8 | Invention Example |
| 20 | 0.0016 | 3.35 | 0.48 | 0.01 | 0.0015 | 0.63 | 0.0022 | 0.045 | 0.0013 | - | 990 | -34 | -57 | -57 | 0.006 | 15.0 | Invention Example |
| 21 | 0.0018 | 2.85 | 0.42 | 0.02 | 0.0019 | 0.35 | 0.0018 | 0.061 | 0.0008 | - | 980 | -35 | -55 | -57 | 0.012 | 15.6 | Comparative Example |
| 22 | 0.0012 | 3.02 | 0.51 | 0.01 | 0.0013 | 0.61 | 0.0016 | 0.042 | 0.0015 | - | 1000 | -38 | -55 | -56 | 0.011 | 15.3 | Invention Example |
| 23 | 0.0013 | 3.65 | 0.61 | - | 0.0008 | 0.73 | 0.0012 | 0.043 | 0.0006 | - | 1010 | -38 | -54 | -57 | 0.008 | 14.5 | Invention Example |
| 24 | 0.0011 | 4.13 | 0.32 | 0.01 | 0.0011 | 0.81 | 0.0015 | 0.055 | 0.0009 | - | 1000 | -37 | -53 | -57 | 0.005 | 14.1 | Invention Example |
| 25 | 0.0013 | 4.85 | 0.25 | - | 0.0013 | 0.34 | 0.0012 | 0.052 | 0.0015 | - | 1000 | -38 | -61 | -57 | 0.004 | 13.9 | Invention Example |

**[Table 1-2]**

| Steel Sheet No. | Component Composition of Steel (mass%) | | | | | | | | | | Finishing Annealing Conditions | | | | Steel Sheet Properties | | Remarks |
|---|---|---|---|---|---|---|---|---|---|---|---|---|---|---|---|---|---|
| | C | Si | Mn | P | S | Al | N | Cu | O | Others | Soaking Temperature (°C) | Dew Point (°C) of Atmosphere | | | Oxygen Weight (g/m²) Per Unit Area | Iron Loss W_{17/200} (W/kg) | |
| | | | | | | | | | | | | D_{H} | D_{S} | D_{C} | | | |
| 26 | 0.0015 | 5.2 | 0.35 | 0.01 | 0.0005 | 0.54 | 0.0012 | 0.042 | 0.0008 | - | Fracture during cold rolling prevented product sheet | | | | | | Comparative Example |
| 27 | 0.0014 | 3.22 | 0.56 | 0.01 | 0.0016 | 1.82 | 0.0005 | 0.041 | 0.0005 | - | 1000 | -33 | -56 | -56 | 0.013 | 14.4 | Invention Example |
| 28 | 0.0012 | 3.13 | 0.51 | 0.01 | 0.0013 | 2.95 | 0.0006 | 0.045 | 0.0004 | - | 1000 | -32 | -55 | -57 | 0.009 | 14.0 | Invention Example |
| 29 | 0.0013 | 3.12 | 0.44 | 0.01 | 0.0011 | 3.26 | 0.0006 | 0.058 | 0.0007 | - | Fracture during cold rolling prevented product sheet | | | | | | Comparative Example |
| 30 | 0.0021 | 3.26 | 1.65 | 0.01 | 0.0013 | 0.53 | 0.0011 | 0.051 | 0.0005 | - | 1000 | -36 | -53 | -57 | 0.008 | 14.6 | Invention Example |
| 31 | 0.0018 | 3.18 | 2.95 | - | 0.0011 | 0.52 | 0.0012 | 0.048 | 0.0008 | - | 1000 | -38 | -55 | -56 | 0.009 | 15.0 | Invention Example |
| 32 | 0.0013 | 3.13 | 3.26 | 0.01 | 0.0015 | 0.56 | 0.0019 | 0.048 | 0.0012 | - | 1000 | -35 | -59 | -57 | 0.015 | 15.8 | Comparative Example |
| 33 | 0.0015 | 3.26 | 0.82 | 0.07 | 0.0013 | 0.62 | 0.0021 | 0.042 | 0.0011 | - | 990 | -36 | -58 | -56 | 0.011 | 15.2 | Invention Example |
| 34 | 0.0012 | 3.31 | 0.35 | 0.11 | 0.0012 | 0.61 | 0.0015 | 0.043 | 0.0015 | - | Fracture during cold rolling prevented product sheet | | | | | | Comparative Example |
| 35 | 0.0013 | 3.32 | 0.49 | 0.02 | 0.0015 | 0.62 | 0.0016 | 0.048 | 0.0047 | - | 1000 | -34 | -55 | -56 | 0.011 | 15.3 | Invention Example |
| 36 | 0.0013 | 3.35 | 0.51 | 0.01 | 0.0015 | 0.61 | 0.0012 | 0.051 | 0.0062 | - | 1000 | -35 | -56 | -57 | 0.013 | 15.8 | Comparative Example |
| 37 | 0.0011 | 3.32 | 0.54 | 0.01 | 0.0048 | 0.59 | 0.0013 | 0.049 | 0.0013 | - | 990 | -36 | -55 | -58 | 0.012 | 15.3 | Invention Example |
| 38 | 0.0011 | 3.32 | 0.53 | 0.01 | 0.0058 | 0.63 | 0.0011 | 0.046 | 0.0012 | - | 1010 | -34 | -58 | -56 | 0.015 | 15.9 | Comparative Example |
| 39 | 0.0015 | 3.33 | 0.54 | 0.01 | 0.0017 | 0.62 | 0.0046 | 0.049 | 0.0016 | - | 1000 | -37 | -57 | -58 | 0.012 | 15.3 | Invention Example |
| 40 | 0.0015 | 3.36 | 0.54 | 0.02 | 0.0013 | 0.59 | 0.0059 | 0.054 | 0.0015 | - | 1000 | -36 | -58 | -56 | 0.011 | 15.8 | Comparative Example |
| 41 | 0.0048 | 3.34 | 0.55 | 0.01 | 0.0012 | 0.60 | 0.0014 | 0.053 | 0.0012 | - | 1000 | -35 | -57 | -55 | 0.010 | 15.1 | Invention Example |
| 42 | 0.0013 | 3.34 | 0.51 | 0.01 | 0.0022 | 0.62 | 0.0013 | 0.004 | 0.0009 | - | 1010 | -38 | -59 | -55 | 0.071 | 15.8 | Comparative Example |
| 43 | 0.0012 | 3.32 | 0.52 | 0.01 | 0.0016 | 0.61 | 0.0011 | 0.011 | 0.0008 | - | 1020 | -38 | -57 | -57 | 0.035 | 15.2 | Invention Example |
| 44 | 0.0016 | 3.31 | 0.49 | 0.01 | 0.0011 | 0.63 | 0.0012 | 0.025 | 0.0016 | - | 1000 | -37 | -58 | -56 | 0.019 | 15.1 | Invention Example |
| 45 | 0.0011 | 3.33 | 0.58 | 0.01 | 0.0004 | 0.61 | 0.0015 | 0.042 | 0.0009 | Sn:0.03 | 1010 | -35 | -55 | -58 | 0.006 | 14.9 | Invention Example |
| 46 | 0.0018 | 3.32 | 0.55 | 0.01 | 0.0006 | 0.62 | 0.0016 | 0.048 | 0.0011 | Sb:0.06 | 1000 | -36 | -56 | -56 | 0.005 | 14.8 | Invention Example |
| 47 | 0.0008 | 3.35 | 0.52 | 0.01 | 0.0012 | 0.63 | 0.0012 | 0.045 | 0.0012 | Ca:0.005 | 1000 | -38 | -55 | -57 | 0.006 | 14.9 | Invention Example |
| 48 | 0.0012 | 3.33 | 0.53 | 0.01 | 0.0015 | 0.65 | 0.0016 | 0.046 | 0.0018 | REM:0.02 | 1010 | -34 | -53 | -57 | 0.008 | 14.9 | Invention Example |
| 49 | 0.0016 | 3.34 | 0.55 | 0.01 | 0.0013 | 0.62 | 0.0015 | 0.053 | 0.0006 | Mg:0.0008 | 990 | -35 | -55 | -55 | 0.005 | 14.9 | Invention Example |
| 50 | 0.0013 | 3.33 | 0.54 | 0.01 | 0.0016 | 0.63 | 0.0013 | 0.051 | 0.0012 | Cr:1.51 | 1000 | -41 | -56 | -56 | 0.011 | 14.3 | Invention Example |

**[Table 1-3]**

| Steel Sheet No. | Component Composition of Steel (mass%) | | | | | | | | | | Finishing Annealing Conditions | | | | Steel Sheet Properties | | Remarks |
|---|---|---|---|---|---|---|---|---|---|---|---|---|---|---|---|---|---|
| | C | Si | Mn | P | S | Al | N | Cu | O | Others | Soaking Temperature (°C) | Dew Point (°C) of Atmosphere | | | Oxygen Weight (g/m²) Per Unit Area | Iron Loss W_{17/200} (W/kg) | |
| | | | | | | | | | | | | D_{H} | D_{S} | D_{C} | | | |
| 51 | 0.0014 | 3.33 | 0.53 | 0.01 | 0.0011 | 0.62 | 0.0012 | 0.048 | 0.0005 | Ni:0.12 | 1040 | -36 | -53 | -55 | 0.008 | 15.1 | Invention Example |
| 52 | 0.0015 | 3.32 | 0.55 | 0.01 | 0.0012 | 0.61 | 0.0013 | 0.103 | 0.0012 | - | 1010 | -35 | -56 | -57 | 0.003 | 15.0 | Invention Example |
| 53 | 0.0010 | 3.31 | 0.53 | 0.01 | 0.0015 | 0.63 | 0.0016 | 0.304 | 0.0013 | - | 1000 | -36 | -54 | -57 | 0.002 | 14.9 | Invention Example |
| 54 | 0.0011 | 3.32 | 0.52 | 0.01 | 0.0009 | 0.61 | 0.0011 | 0.496 | 0.0008 | - | 1000 | -37 | -55 | -58 | 0.001 | 14.9 | Invention Example |
| 55 | 0.0013 | 3.29 | 0.50 | 0.01 | 0.0010 | 0.60 | 0.0015 | 0.510 | 0.0012 | - | Fracture during cold rolling prevented product sheet | | | | | | Comparative Example |
| 56 | 0.0011 | 3.33 | 0.50 | 0.01 | 0.0013 | 0.58 | 0.0012 | 0.054 | 0.0006 | Mo:0.021 | 1000 | -35 | -58 | -58 | 0.005 | 14.9 | Invention Example |
| 57 | 0.0010 | 3.34 | 0.48 | 0.01 | 0.0014 | 0.61 | 0.0017 | 0.051 | 0.0006 | Ti:0.004 | 1000 | -34 | -58 | -57 | 0.004 | 15.2 | Invention Example |
| 58 | 0.0012 | 3.30 | 0.52 | 0.01 | 0.0012 | 0.60 | 0.0012 | 0.051 | 0.0008 | Nb:0.0005 | 1000 | -35 | -57 | -58 | 0.006 | 15.3 | Invention Example |
| 59 | 0.0010 | 3.34 | 0.53 | 0.01 | 0.0008 | 0.61 | 0.0016 | 0.051 | 0.0008 | V:0.011 | 1000 | -35 | -57 | -57 | 0.009 | 15.1 | Invention Example |
| 60 | 0.0008 | 3.29 | 0.51 | 0.01 | 0.0014 | 0.60 | 0.0015 | 0.054 | 0.0007 | As:0.006 | 1000 | -34 | -58 | -58 | 0.005 | 15.0 | Invention Example |
| 61 | 0.0013 | 3.34 | 0.50 | 0.01 | 0.0013 | 0.59 | 0.0014 | 0.051 | 0.0006 | Pb:0.0004 | 1000 | -36 | -57 | -58 | 0.008 | 15.2 | Invention Example |
| 62 | 0.0008 | 3.33 | 0.50 | 0.01 | 0.0012 | 0.59 | 0.0014 | 0.053 | 0.0009 | B:0.0004 | 1000 | -35 | -59 | -57 | 0.005 | 15.1 | Invention Example |
| 63 | 0.0012 | 3.30 | 0.50 | 0.01 | 0.0014 | 0.60 | 0.0018 | 0.049 | 0.0005 | Zr:0.006 | 1000 | -35 | -57 | -57 | 0.006 | 15.2 | Invention Example |
| 64 | 0.0013 | 3.33 | 0.48 | 0.01 | 0.0010 | 0.62 | 0.0018 | 0.049 | 0.0009 | Ta:0.0003 | 1000 | -35 | -58 | -58 | 0.006 | 15.3 | Invention Example |
| 65 | 0.0012 | 3.31 | 0.48 | 0.01 | 0.0007 | 0.63 | 0.0012 | 0.051 | 0.0006 | W:0.007 | 1000 | -35 | -58 | -57 | 0.006 | 15.0 | Invention Example |
| 66 | 0.0010 | 3.31 | 0.51 | 0.01 | 0.0013 | 0.59 | 0.0015 | 0.051 | 0.0008 | Co:0.04 | 1000 | -35 | -57 | -59 | 0.008 | 14.9 | Invention Example |
| 67 | 0.0010 | 3.34 | 0.49 | 0.01 | 0.0013 | 0.59 | 0.0014 | 0.049 | 0.0006 | Se:0.002 | 1000 | -35 | -58 | -57 | 0.007 | 15.2 | Invention Example |
| 68 | 0.0011 | 3.28 | 0.49 | 0.01 | 0.0010 | 0.61 | 0.0013 | 0.052 | 0.0007 | Bi:0.0004 | 1000 | -35 | -56 | -58 | 0.008 | 15.3 | Invention Example |
| 69 | 0.0011 | 3.27 | 0.51 | 0.01 | 0.0010 | 0.60 | 0.0012 | 0.053 | 0.0009 | Ge:0.0004 | 1000 | -36 | -57 | -59 | 0.006 | 14.9 | Invention Example |
| 70 | 0.0012 | 3.34 | 0.49 | 0.01 | 0.0009 | 0.62 | 0.0017 | 0.052 | 0.0007 | Ga:0.005 | 1000 | -35 | -57 | -58 | 0.008 | 14.9 | Invention Example |
| 71 | 0.0013 | 3.29 | 0.52 | 0.01 | 0.0010 | 0.59 | 0.0011 | 0.12 | 0.0008 | Cr:0.20,Ni:0.13 | 1000 | -35 | -58 | -57 | 0.004 | 14.9 | Invention Example |
| 72 | 0.0009 | 3.28 | 0.52 | 0.01 | 0.0015 | 0.60 | 0.0013 | 0.30 | 0.0008 | Sn:0.04,Ca:0.003 | 1000 | -35 | -57 | -57 | 0.003 | 14.8 | Invention Example |
| 73 | 0.0010 | 3.35 | 0.50 | 0.01 | 0.0010 | 0.62 | 0.0019 | 0.30 | 0.0007 | Cr:0.21.Ni:0.04,Sn:0.04 | 1000 | -35 | -57 | -58 | 0.002 | 14.8 | Invention Example |
| 74 | 0.0009 | 3.35 | 0.53 | 0.01 | 0.0011 | 0.58 | 0.0015 | 0.29 | 0.0010 | Cr:0.05,Ni:0.02,Sb:0.02 | 1000 | -34 | -59 | -57 | 0.003 | 14.8 | Invention Example |
| 75 | 0.0009 | 3.33 | 0.51 | 0.01 | 0.0012 | 0.59 | 0.0019 | 0.29 | 0.0007 | Cr:0.18,Ni:0.05,Ca:0.003 | 1000 | -35 | -58 | -56 | 0.003 | 14.9 | Invention Example |

**[Table 1-4]**

| Steel Sheet No. | Component Composition of Steel (mass%) | | | | | | | | | | Finishing Annealing Conditions | | | | Steel Sheet Properties | | Remarks |
|---|---|---|---|---|---|---|---|---|---|---|---|---|---|---|---|---|---|
| | C | Si | Mn | P | S | Al | N | Cu | O | Others | Soaking | Dew Point (°C) of Atmosphere | | | Oxygen Weight (g/m²) Per Unit Area | Iron Loss W_{17/200} (W/kg) | |
| | | | | | | | | | | | temperature (°C) | D_{H} | D_{S} | D_{C} | | | |
| 76 | 0.0012 | 3.30 | 0.49 | 0.01 | 0.0011 | 0.61 | 0.0013 | 0.31 | 0.0006 | Cr:0.25,Ni:0.11,Mg:0.001 | 1000 | -34 | -57 | -58 | 0.003 | 14.8 | Invention Example |
| 77 | 0.0011 | 3.29 | 0.50 | 0.01 | 0.0012 | 0.61 | 0.0012 | 0.31 | 0.0008 | Cr:0.30,Ni:0.18,REM:0.02 | 1000 | -34 | -56 | -58 | 0.002 | 14.8 | Invention Example |
| 78 | 0.0013 | 3.35 | 0.52 | 0.01 | 0.0012 | 0.61 | 0.0012 | 0.30 | 0.0007 | Sn:0.03,Cr:0.25,Ni:0.23,Mo:0.041 | 1000 | -34 | -58 | -57 | 0.003 | 15.0 | Invention Example |
| 79 | 0.0010 | 3.32 | 0.53 | 0.01 | 0.0009 | 0.61 | 0.0013 | 0.31 | 0.0008 | Sn:0.03,Cr:0.25,Ni:0.24,Ti:0.003 | 1000 | -36 | -57 | -59 | 0.002 | 15.1 | Invention Example |
| 80 | 0.0009 | 3.34 | 0.48 | 0.01 | 0.0007 | 0.62 | 0.0014 | 0.31 | 0.0006 | Sn:0.03,Cr:0.24,Ni:0.25,Nb:0.0003 | 1000 | -34 | -58 | -58 | 0.002 | 15.2 | Invention Example |
| 81 | 0.0011 | 3.31 | 0.51 | 0.01 | 0.0015 | 0.60 | 0.0015 | 0.29 | 0.0006 | Sn:0.03,Cr:0.24,Ni:0.25,V:0.005 | 1000 | -35 | -58 | -59 | 0.003 | 15.0 | Invention Example |
| 82 | 0.0012 | 3.28 | 0.49 | 0.01 | 0.0011 | 0.61 | 0.0019 | 0.30 | 0.0008 | Sn:0.03,Cr:0.25,Ni:0.23,As:0.003 | 1000 | -34 | -57 | -59 | 0.002 | 14.9 | Invention Example |
| 83 | 0.0009 | 3.34 | 0.53 | 0.01 | 0.0013 | 0.62 | 0.0018 | 0.30 | 0.0005 | Sn:0.03,Cr:0.24,Ni:0.24,Pb:0.0007 | 1000 | -34 | -59 | -58 | 0.003 | 15.2 | Invention Example |
| 84 | 0.0008 | 3.33 | 0.51 | 0.01 | 0.0015 | 0.58 | 0.0012 | 0.29 | 0.0008 | Sn:0.03,Cr:0.25,Ni:0.25,B:0.0006 | 1000 | -34 | -57 | -57 | 0.002 | 15.1 | Invention Example |
| 85 | 0.0012 | 3.29 | 0.50 | 0.01 | 0.0013 | 0.60 | 0.0016 | 0.31 | 0.0005 | Sn:0.03,Cr:0.25,Ni:0.22,Zr:0.003 | 1000 | -35 | -57 | -56 | 0.002 | 15.1 | Invention Example |
| 86 | 0.0013 | 3.32 | 0.51 | 0.01 | 0.0007 | 0.63 | 0.0017 | 0.30 | 0.0008 | Sn:0.03,Cr:0.26,Ni:0.24,Ta:0.0005 | 1000 | -36 | -58 | -59 | 0.003 | 15.2 | Invention Example |
| 87 | 0.0013 | 3.34 | 0.53 | 0.01 | 0.0012 | 0.61 | 0.0016 | 0.31 | 0.0010 | Sn:0.03,Cr:0.24,Ni:0.24,W:0.012 | 1000 | -35 | -58 | -57 | 0.002 | 15.1 | Invention Example |
| 88 | 0.0011 | 3.28 | 0.51 | 0.01 | 0.0011 | 0.61 | 0.0017 | 0.30 | 0.0007 | Sn:0.03,Cr:0.23,Ni:0.25,Co:0.009 | 1000 | -35 | -58 | -58 | 0.003 | 14.9 | Invention Example |
| 89 | 0.0013 | 3.28 | 0.49 | 0.01 | 0.0013 | 0.60 | 0.0019 | 0.30 | 0.0008 | Sn:0.03,Cr:0.26,Ni:0.23,Se:0.001 | 1000 | -36 | -57 | -57 | 0.002 | 15.0 | Invention Example |
| 90 | 0.0010 | 3.33 | 0.50 | 0.01 | 0.0007 | 0.61 | 0.0014 | 0.30 | 0.0009 | Sn:0.03,Cr:0.24,Ni:0.23,Bi:0.0002 | 1000 | -36 | -57 | -58 | 0.003 | 15.1 | Invention Example |
| 91 | 0.0008 | 3.28 | 0.49 | 0.01 | 0.0012 | 0.60 | 0.0018 | 0.31 | 0.0007 | Sn:0.03,Cr:0.25,Ni:0.24,Ge:0.002 | 1000 | -34 | -58 | -58 | 0.003 | 14.9 | Invention Example |
| 92 | 0.0013 | 3.33 | 0.49 | 0.01 | 0.0007 | 0.59 | 0.0016 | 0.30 | 0.0008 | Sn:0.03,Cr:0.24,Ni:0.25,Ga:0.008 | 1000 | -35 | -59 | -58 | 0.002 | 14.9 | Invention Example |

## Claims

1. A method for producing a non-oriented electrical steel sheet, comprising:
hot-rolling a slab with a component composition including C: 0.005 mass% or less, Si: 3.0 to 5.0 mass%, Al: 3.0 mass% or less, Mn: 3.0 mass% or less, P: 0.10 mass% or less, S: 0.005 mass% or less, N: 0.005 mass% or less, Cu: 0.01 to 0.5 mass%, and O: 0.005 mass% or less, with the balance being Fe and unavoidable impurities;
performing hot-band annealing;
performing cold rolling involving one cold rolling pass, or two or more cold rolling passes with intermediate annealing between each cold rolling pass to obtain a cold-rolled sheet; and
performing finishing annealing using a continuous annealing line including a heating zone, a soaking zone, and a cooling zone,
**characterized in that**
the finishing annealing is performed by setting a dew point D_{H} of a furnace atmosphere in a region where the steel sheet temperature is in the range from 500°C to 800°C in the heating zone to -20°C or lower and also by setting a dew point D_{S} of the furnace atmosphere in a region where the steel sheet temperature is in the range from above 800°C to a soaking temperature in the heating zone, as well as in a region where the steel sheet is in the soaking zone, to -40°C or lower, while maintaining a relationship of D_{H}>D_{S}.

2. The method for producing the non-oriented electrical steel sheet according to claim 1, wherein
the finishing annealing is performed by setting a dew point D_{C} of the furnace atmosphere in a region where the steel sheet temperature is in the range from the soaking temperature to 500°C in the cooling zone to -40°C or lower.

3. The method for producing the non-oriented electrical steel sheet according to claim 1 or 2, wherein
the slab further includes, in addition to the above component composition, at least one group of components selected from the following groups A to J:
- group A: at least one selected from the group consisting of Sn: 0.005 to 0.20 mass% and Sb: 0.005 to 0.20 mass%,
- group B: at least one selected from the group consisting of Ca: 0.001 to 0.010 mass%, Mg: 0.0002 to 0.005 mass%, and REM: 0.001 to 0.05 mass%,
- group C: Cr: 0.01 to 3.0 mass%,
- group D: Ni: 0.01 to 1 mass%,
- group E: at least one selected from the group consisting of Mo: 0 to 0.050 mass% and B: 0 to 0.0020 mass%,
- group F: at least one selected from a group consisting of Ti: 0 to 0.010 mass%, Nb: 0 to 0.0050 mass%, V: 0 to 0.050 mass%, Pb: 0 to 0.0020 mass%, Zr: 0 to 0.050 mass%, Ta: 0 to 0.0020 mass%, W: 0 to 0.050 mass%, Se: 0 to 0.0050 mass%, and Bi: 0 to 0.0020 mass%,
- group G: As: 0 to 0.020 mass%,
- group H: Zn: 0 to 0.010 mass%,
- group I: Co: 0 to 0.10 mass%, and
- group J: at least one selected from the group consisting of Ge: 0 to 0.030 mass% and Ga: 0 to 0.030 mass%.

4. The method for producing the non-oriented electrical steel sheet according to any one of claims 1 to 3, wherein
the slab has a thickness ranging from 30 mm to 300 mm inclusive and is produced by tapping molten steel from a converter or an electric furnace, adjusting components of the tapped molten steel, and then subjecting the molten steel to continuous casting.
